# EUROPEAN PATENT APPLICATION

(11) **EP 1 074 368 A1**
(43) Date of publication of application: **07.02.2001**
(21) Application number: 99500133.6
(22) Date of filing: 02.08.1999
(51) Int. Cl.: B29C 33/38, B29C 33/56

(54) **Construction of moulds for moulding integral polyurethane foams and finished moulded products obtained**

(71) Applicant: Retolaza Ibargüengoitia, Juan, 48014 Bilbao, Vizcaya (ES)
(72) Inventor: Retolaza Ibargüengoitia, Juan, 48014 Bilbao, Vizcaya (ES)
(74) Representative: Perez Bonal, Bernardo

(57) **Abstract**

Using the master model (1), complete with casing (2) and calibrated layer of wax (3), an integral polyurethane foam product (7) can be obtained. A two-part mould is constructed from epoxy resin (4) containing aluminium powder, complete with aluminium frame (5) and, after extracting the model (1 and 2) from the mould and removing the outer layer (3), the model is placed back inside the mould and the empty space left by removal of the outer layer is filled with silicon rubber in liquid form, which, when hardened, forms the shell (6) which is to serve as the one-piece moulding surface for the moulding of integral polyurethane and which will bear no unwanted marks or lines caused by joins in the mould.

## Description

### NATURE OF THE INVENTION

The invention proposed consists of improvements in the construction of moulds for use in the moulding of integral or "self skinning" polyurethane foams, moulds which as a general rule have an etched surface to produce a simulated leather effect or other such finish. Peculiar to the invention is the special way in which the mould is constructed, from epoxy resin and silicon rubber, in such a way that the moulding cavity is formed within a single, one-piece entity, thus avoiding joins between different parts of the mould and, as a consequence, eliminating the presence of marks, lines or burrs in the finished moulded article and any subsequent operations which might otherwise be necessary to remove them.

### BACKGROUND TO THE INVENTION

The applicant's own patent no. 990, entitled "Improvements in the construction of metal moulds for use in polyurethane foam moulding", describes the advantages of electroformed metal moulds over other known mould types, which are unable to fully meet the growing demands of the market, particularly in the motor industry.

It points out the advantages of being able to line up the joins in a mould itself with seams or changes in etched pattern of the finished product in such a way as to ensure that any unavoidable marks such as those thus caused are not readily visible to the naked eye or, if discernible, that they can be removed easily.

It is clear that current moulding processes require moulds that, at the very least, can be opened up into two halves to enable the finished product to be removed from the mould. Where these two halves fit together, a mark, a line, or even a burr is formed, largely as a result of the low pressures at which moulds are usually closed up in the moulding of polyurethane foams.

Given that traces of such marks are not always acceptable to the market, it has become necessary to develop a new moulding process which is able to combat this problem by using moulds in which the moulding cavity is formed within a single, one-piece entity.

There are already in existence moulding processes in which joins or marks other than those expressly required in the finished product can be avoided. For example, padded arm and headrests for use in the motor industry are manufactured using one-piece electroformed moulds for the outer vinyl casing, which is produced by rotational moulding process, and conventional moulds for the subsequent injection of liquid polyurethane, the finished product forming a single unit free from visible joins or burrs.

Unfortunately, this solution cannot be applied to the moulding of integral polyurethane foams, because these require both the skin and the foam centre to be produced in a single operation, thus creating a single, continuous and indivisible unit.

It would appear, therefore, that the only possibility is to devise a moulding process in which a one-piece moulding cavity is used. This solution would mean the component comprising the moulding surface having to be broken up and destroyed in order for the finished product to be removed from the mould, or alternatively finding a way of retrieving the finished product without destroying the moulding surface. It is this solution that is the subject of the invention hereafter described.

The applicant is unaware of the current existence of patents or manufacturing processes involving the moulding of products in individual one-piece cavity moulds of any internal configuration such as those hereafter described.

### DESCRIPTION OF THE INVENTION

The invention described in this document relates to certain improvements in the construction of moulds for use in the moulding of polyurethane foams, the said process taking the form of a single operation, without the need for retouching of any kind, and designed to take advantage of the special characteristics of the mould.

Because silicon rubbers are sufficiently flexible and elastic to withstand temporary deformation, it is reasonable to suppose that a silicon rubber mould might serve as the basis for a method of construction capable of achieving the desired objective. This would have to be a one-piece mould without joins, in which the integral polyurethane foam product could be moulded and subsequently retrieved by releasing it from its flexible, elastic silicon rubber sheath, and which could be used to repeat the moulding process often enough for it to be considered a viable method of construction for mass-produced items.

Let us assume that the items to be moulded are gear-stick knobs for use in the motor industry, with or without surface etching, but bearing no unwanted marks such as dividing lines between two halves of the mould.

For this purpose, as in the case of the patent referred to above, a master model of the finished item required is constructed from wood or similar, or alternatively from steel. This model, which bears no surface etching of any kind, is produced by conventional methods or as described in patent no. 990 and is used as the basis on which to construct a mould in which identical items can be moulded from integral polyurethane.

### DESCRIPTION OF DIAGRAMS

This description, which has been composed with the aim of creating a better and easier understanding of the characteristics of the invention, is accompanied by a series of diagrams, of an illustrative rather than restrictive nature, designed to complement the text, as follows:

Figure 1 shows the master knob, produced by conventional methods from wood or similar, or alternatively from steel.

Figure 2 shows the same knob, now covered in a casing of real or artificial leather to match the desired appearance of the finished product which it is intended will be moulded from integral polyurethane foam.

Figure 3 shows the same knob as in figure 2, following the application of a calibrated layer of wax.

Figure 4 shows an ideal mould, made from epoxy resin in two halves, with aluminium frame, enclosing the model as shown in figure 3.

Figures 5a and 5b show two identical epoxy resin moulds as shown in figure 4, one of which is used to obtain the silicon rubber shell, the other to obtain the finished product in polyurethane.

Figure 6 shows the silicon rubber shell.

Figure 7 shows the finished polyurethane foam product after its removal from the mould.

### PREFERRED METHOD FOR CARRYING OUT THE INVENTION

As stated previously, this invention relates to certain improvements in the construction of moulds for use in the moulding of integral polyurethane foams, using a master model. The example chosen consists of a knob (1), produced by conventional methods from wood or similar, steel or any other suitable material, and subsequently covered in a real or artificial leather casing (2) according to the desired choice of finish in order to give the end product (7) the texture of leather or other material, irrespective of the dimensions, configuration and finish of the end product, which is to be produced in a material appropriate to the desired objectives such as integral polyurethane foam, and peculiar to the invention is the fact that the surface of the end product, in this case a knob, made from integral polyurethane foam with or without surface etching, bears no trace of unwanted lines or burrs, nor of marks caused by the join between the two halves of the mould, owing to the fact that a calibrated layer of wax (3) about 2 mm thick is applied, by hand with the aid of a spatula or its equivalent, to the leather casing (2).

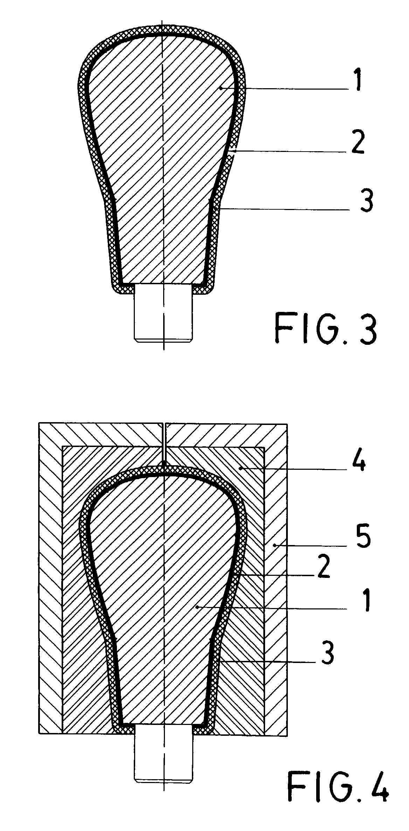

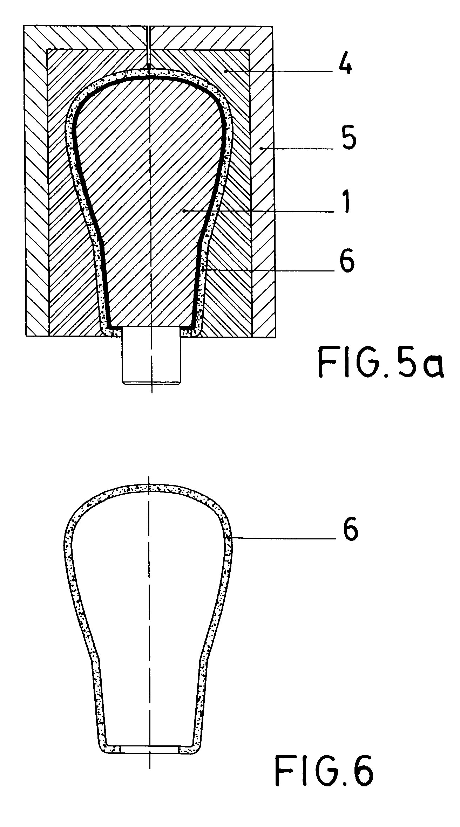

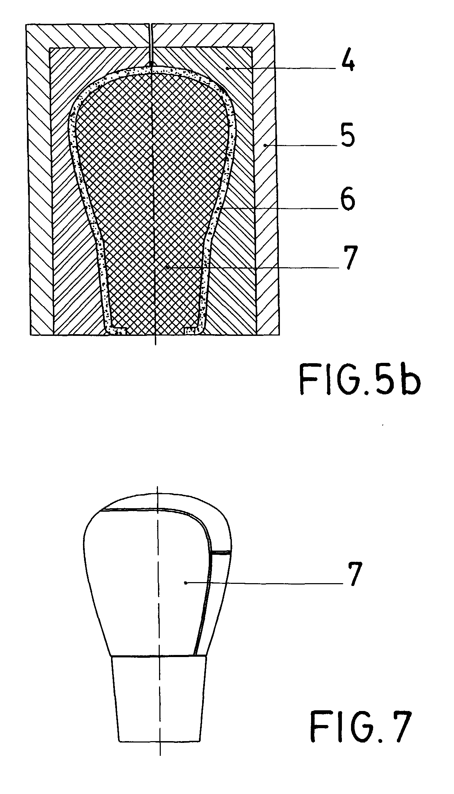

Using the wax-covered model (figure 3), a conventional mould (4), made from epoxy resin containing aluminium powder, is constructed in two halves, complete with aluminium frame (5) -see figure 4. The model as shown in figure 3, comprising (1), (2) and (3) is then extracted from the mould and, for operational reasons, a duplicate mould is constructed. The two identical moulds shown in figures 5a and 5b are now ready for use.

The model is now placed inside the mould shown in figure 5a, which comprises epoxy resin (4) and aluminium frame (5) and the empty space remaining in the moulding cavity is filled with silicon rubber in liquid form (6), which, once it has hardened, forms a sort of shell which is extracted from the mould, together with the model. After removing it from the model, the shell (6) is then placed in the mould shown in figure 5b, thus completing construction of the final mould, a one-piece unit with no joins, which is to be used for the moulding of integral polyurethane foam (7). After moulding, the finished product (7) is obtained by removing it from the silicon rubber shell or sheath (6). The mould shown in figure 5b is a production mould for the manufacture of mass-produced integral polyurethane foam knobs.

The above description assumes the pre-existence of additional aids to production, such as mould heating and cooling systems, thermostats, attachments for other components which make up a gear-stick knob and any other items normally required.

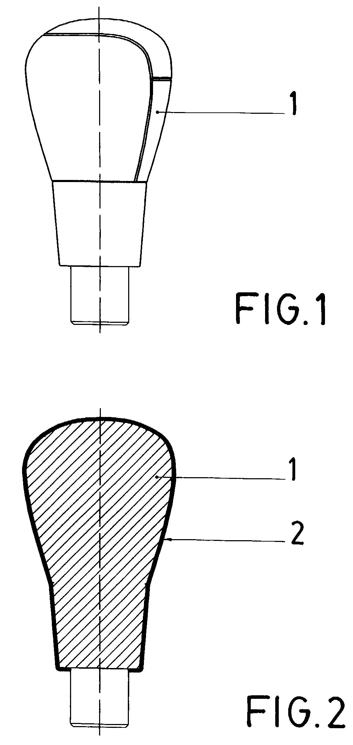

It should also be pointed out that for the purposes of mass-production it may be necessary to construct more than one production mould identical to that shown in figure 5b; if this is the case, the operations described for the mould in figure 4 and the master model in figure 2 would need to be repeated.

The essential nature of this invention remains the same, notwithstanding variations in the materials, shape, size and arrangement of the components used, and the descriptions given are by no means exhaustive, being sufficient for the invention to be reproduced by an expert.

## Claims

1. Improvements in the construction of moulds for use in the moulding of polyurethane foams, using a master model (1), produced by conventional methods from wood or similar, steel or any other suitable material, and subsequently covered in a real or artificial leather casing (2) according to the desired choice of finish in order to give the end product (7) the texture of leather or other material, irrespective of the dimensions, configuration and finish of the end product, which is to be produced in an appropriate material such as integral polyurethane foam, peculiar to the invention being the fact that the surface of the end product, made from integral polyurethane foam with or without surface etching, bears no trace of unwanted lines or burrs, nor of marks caused by joins between separate parts of the mould, owing to the fact that to the casing (2) is applied a calibrated layer of wax (3), around which is constructed a conventional two-part mould, made from epoxy resin (4) containing aluminium powder, complete with aluminium frame (5), from which the model (1 and 2) with its layer of wax (3) is extracted, the said layer of wax (3) then being removed and the model (1) with leather casing (2) being placed inside the first mould again, the empty space between it and the outer epoxy resin walls of the mould cavity (4) being filled with silicon rubber in liquid form, which, when hardened, forms the silicon rubber sheath or shell (6) which is to serve as the one-piece moulding surface for the moulding of integral polyurethane.

2. Improvements in the construction of moulds for use in the moulding of polyurethane foams, as described above, characterized by the fact that once obtained, the silicon rubber shell (6) is placed inside the cavity of the epoxy mould (4) and its support frame (5),thus forming the final production mould for the desired end product (7), which is moulded by conventional means and extracted before recommencement of the production process.

3. Mould for items to be produced from polyurethane foam, as described in claims 1 and 2 above, characterized by being made from epoxy resin containing aluminium powder with an outer aluminium frame in two halves, incorporating a heating or cooling system, and having a moulding surface comprising a silicon rubber shell which is capable of being infinitely and accurately reproduced to match the master model of the finished product desired.

4. Finished polyurethane foam products, as described in claims 1 to 3 above, characterized by being made from an appropriate material, such as integral polyurethane foam, and moulded to the desired texture, whether it be leather, smooth or otherwise, with a single finish or with a combination of finishes according to requirements and depending upon the type of casing (2) with which the model (1) is covered and consequently upon the finish of the inner face of the silicon rubber shell (6).
